Europäisches Patentamt

European Patent Office

Office européen des brevets

(19)

(11) Publication number: **0 160 371**
A1

(12) # EUROPEAN PATENT APPLICATION

(21) Application number: **85301666.5**

(22) Date of filing: **11.03.85**

(51) Int. Cl.⁴: **B 60 G 5/04**
**B 60 P 5/00, B 60 G 21/06**

(30) Priority: **20.03.84 GB 8407174**
**08.09.84 GB 8422747**

(43) Date of publication of application:
**06.11.85 Bulletin 85/45**

(84) Designated Contracting States:
**AT BE CH DE FR GB IT LI LU NL SE**

(71) Applicant: **NORDE SUSPENSIONS LIMITED**
**Sywell Airport**
**Northampton NN6 0BU(GB)**

(72) Inventor: **Roberts, Richard Walter**
**2 The Heights Market Harborough**
**Leicestershire LE 16 8BQ(GB)**

(74) Representative: **Houghton, David et al,**
**Hulse & Co. Cavendish Buildings West Street**
**Sheffield, S1 1ZZ(GB)**

(54) **Vehicle suspension systems.**

(57) The invention relates to suspension systems for multiple axle systems. With multiple axle vehicles, it is necessary not only for the vehicle to carry a total load within a permitted maximum, but also for the load applied to each axle to be within a permitted maximum. It is not uncommon in on-the-road, in off-the-road use that the wheels of an axle lose contact with the ground, thus transferring the total load to the remaining axles, which then takes loads greater than the permitted maximum, and for which they may not have been adequately designed. The object of the invention is to eliminate this problem, which objective is met by a suspension system comprising in respect of each axle (2), two trailing arms (3) one to each side of the vehicle and pivotally mounted (4) below the vehicle, the respective axle (2) being mounted across the two trailing arms (3), and a fluid displacer (5) mounted between each trailing arm and the vehicle body, the fluid displacers (5) to each side of the vehicle being connected to each other in the longitudinal direction.

./...

FIG1

0160371

VEHICLE SUSPENSION SYSTEMS

This invention relates to vehicle suspension systems, and is particularly concerned with suspension systems for heavy goods vehicles.

To enable a vehicle to carry greater weights it is well known to provide an increased number of axles carrying road wheels. Thus, twin-axle and tri-axle vehicles are in common use. However, in determining what permitted weight a vehicle can carry, current legislation not only specifies a maximum permitted total weight, but also a maximum permitted total weight per axle provided on the vehicle.

It will be understood that during normal road usage, and even more so when off-the-road work is involved, ground conditions are such that intermittently, but regularly, one axle of a multiple axle system is caused not to take part of or all of its allotted weight, and when the remaining axles are forced to carry the total load. This not only puts the vehicle in an illegal condition where the remaining axles are each carrying more than their permitted maximum, but also can cause damage to the component parts of the system by imposing loads on them for which they have not been designed.

It is also the case that with trailer vehicles connected by a fifth wheel coupling to a tractor vehicle, the heights of the coupling components on different makes of tractor and trailer are not standard. Thus, coupling a trailer to a tractor for which it has not been purposely designed can cause a raising or a lowering of the front of the trailer, with consequent unacceptable transfer of loading from the front to the rear, or rear to the front, axles respectively.

The object of the present invention is to provide a suspension system for a multiple axle vehicle which avoids the disadvantages mentioned above.

According to the present invention, a suspension system for multiple axle vehicles comprises, in respect of each axle, two trailing arms one to each side of the vehicle and pivotally mounted below the vehicle, the respective axle being mounted across the two trailing arms, and a fluid displacer mounted between each trailing arm and the vehicle body, the fluid displacers to each side of the vehicle being connected to each other in the longitudinal direction.

Most desireably the fluid displacers are located on the trailing arm to the opposite side of the axle to the pivotal connection of the trailing arm to the vehicle, the horizontal distance between the vertical centre line of the pivotal connection and vertical centre line of the axle, and the horizontal distance between the vertical centre line of the pivotal connection and the vertical centre line of the fluid displacer being such that the ratio of the said horizontal distances remains substantially constant during permitted deflection of the trailing arm. Preferably, the said horizontal distances are such that during permitted deflection of the trailing arm the said ratio does not vary by more than 10%, still further preferaby by not more than 5%. By ensuring that the said ratio remains substantially constant during permitted deflection of the trailing arm, it can be substantially guaranteed that the total load on the vehicle is equalised across the number of axles employed.

It is important that the load applied to the moving component of each fluid displacer remains substantially constant. To achieve this it is highly desirable to employ a fluid displacer in the form of a rolling diaphragm. Thus the displacer may take the form of a generally cylindrical body having a closed outer end, and formed from a flexible material, said closed outer end being engaged by a smooth-sided piston secured to the trailing arm. Thus during deflection of the trailing arm the piston carries the closed end of the displacer upwardly and downwardly with a rolling action between the closed end and the piston that substantially eliminates any frictional effect. With such an arrangement the variation in load on the piston can be maintained within +/- 0.5% over the full height of its permitted movement, which with the invention can be as large as 200mm.

Conventionally, the majority of suspension systems employ a so-called bump-stop to limit the maximum permitted movement of the axle towards the vehicle. With the invention, a bump-stop is provided within the fluid displacer to be engaged by the piston. Thus, a greater articulation of the axle is permitted than has hitherto been possible before the maximum axle bump over-travel condition is reached and at the same time, and in the event of a sudden failure of the suspension system or of a displacer unit, damage to the interconnected displacer units is prevented.

Preferably, the contact face of the bump-stop and the face of the piston engaging the rolling diaphragm are so arranged that in the maximum axle bump over-travel condition, the two faces are substantially parallel, and desirably horizontal (e.g. within +/- 10°). Thus, there is prevented any slip between the piston and the bump-stop as they contact, thereby preventing damage to the particular fluid displacer concerned.

It is further preferred that the end of a trailing arm adjacent to the pivot of the next trailing arm is provided with a check strap secured between the end of the trailing arm and the vehicle to limit the maximum permitted movement of a respective axle away from the vehicle, thereby preventing damage to the fluid displacer on that trailing arm.

The trailing arms may be resilient and take the form of leaf springs on which the axles are mounted. Equally the trailing arms may be relatively rigid, and the axles mounted thereon with an interposed resilient suspension means such as of the rubber-block type.

Thus, in normal use, with the displacers to each side filled with fluid, and with the vehicle laden and running on level ground, fluid is evenly distributed across the number of displacers provided. Immediately a road wheel meets uneven ground and lifts to an appreciable extent, upward movement of the trailing arm compresses the displacer to drive fluid into the displacers fore and/or aft with which it is interconnected. Similarly, if a road wheel is lowered to an appreciable extent, downward movement of the trailing arm expands the displacer and when fluid is drawn in from those displacers fore and/or aft with which it is interconnected.

The net effect is that irrespective of road wheel movement, up or down, the proportion of the total vehicle load allotted to a particular axle cannot be removed from that axle, with the maintenance at all times of an equalisation of axle loading within the permitted maximum across all axles, and preventing unacceptable and damaging excess loading of some of the axles, during normal usage.

More particularly in off-the-road usage, a road wheel can be caused to lift and lower to an appreciable extent in relation to the other road wheel on the same axle. It is therefore a further feature of the invention that the displacers to each side of the vehicle may be laterally connected, whereby to provide torsional freedom of, e.g. a front bogie of a multi-axle drawbar trailer, relative to the chassis, to avoid twisting of the chassis and the load.

Equally, when a trailer is connected to a tractor by a fifth wheel coupling, any tendency to raise or lower the front of the trailer causes displacement of fluid to or from the displacers of the front and rear axles, thereby automatically compensating for any tendency to transfer the load between those axles.

0160371

Each displacer is preferably designed such that any extension or contraction during transfer of fluid to or from a displacer is effected without any variation of its cross-sectional area displacer, and whereby a wide range of heights of vehicle body above an axle can be provided for whilst maintaining a constant pressure per unit area within the displacers. The use of a rolling diaphragm as the fluid displacer achieves this, has the additional advantage of enabling the distance between the spring centres transversely of the vehicle to be directly comparable with the spring centres of conventional spring steel suspension systems and at the same time permit a much greater axle travel than is possible with such conventional systems. The roll stiffness of any suspension system is directly proportional to the spring seat centres and consequently substantial benefits in vehicle handling and safety are achieved by the provision of a significantly increased roll stiffness and roll stability with the invention, than with other conventional fluid suspension systems. This stems from the ability to use a smaller diameter displacer, and higher internal pressure than with existing gas systems.

The suspension system of the invention can readily be adapted to provide a load indication, in respective of both total load and load per axle. Thus an appropriate mechanical, electro-mechanical, electric or electronic sensing means can be associated with each of the fluid displacers to provide an individual signal relating to the load on the axle with which a displacer is associated, and which signal can be aggregated to signal the total load applied over the full system.

This has the advantage that should there be any inadvertent overloading of the vehicle, or should any fault develop during use that has the result of imposing loads on particular axles beyond the permitted load or beyond the safe working load, then the operative can be signalled by a suitable warning device that that condition exists thereby allowing the operative to take substantially immediate remedial action.

One embodiment of the invention will now be described with reference to the accompanying drawings, in which:-

Figure 1 is a semi-schematic side elevation of a vehicle suspension system according to the invention;

Figure 2 is a sectional side elevation of the fluid displacer of Figure 1; and

Figure 3 is a plan view of part of Figure 1 showing an adaptation of the suspension system to provide a load indicator.

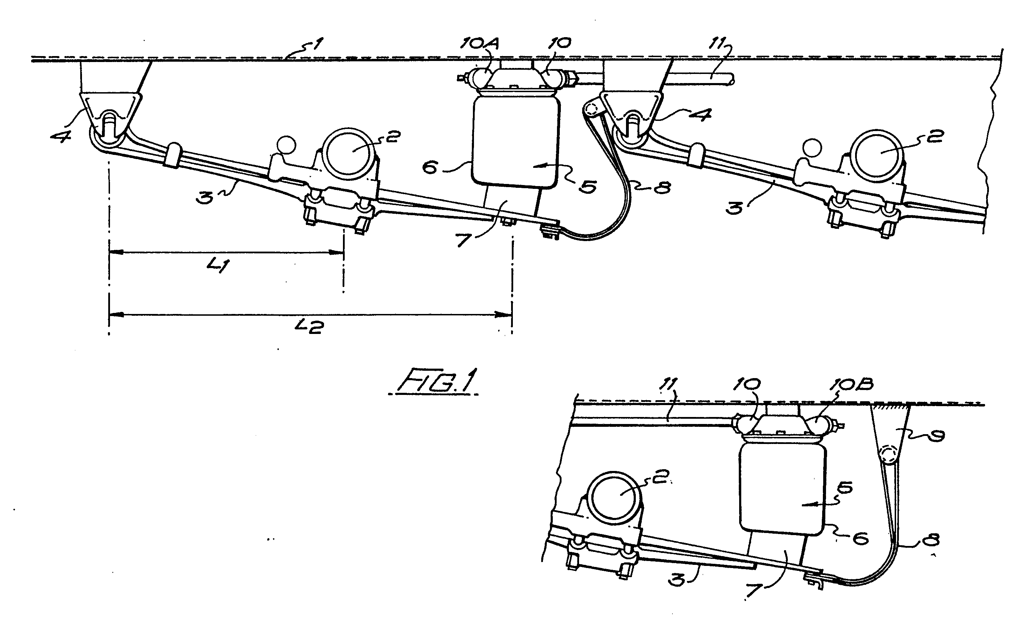

In Figure 1, a trailer vehicle 1 has a number of axles 2. Each axle 2 is secured to a respective trailing arm 3, in the form of a taper leaf suspension spring, and each trailing arm is pivotally secured to a respective bracket 4 depending from the under surface of the trailer. Towards the free end of each training arm, a fluid displacer 5 is provided having a body portion 6 secured at an appropriate position to the underside of the trailer, and a piston or piston rod 7 emerging from the body and secured to the trailing arm. The free end of each trailing arm is secured to a flexible safety strap 8 attached either to the immediately adjacent bracket 4, or to a separate bracket 9 secured to the underside of the trailer.

Each fluid displacer 5 has two inlets/outlets 10 for fluid. Commencing with the leading fluid displacer (in the intended direction of travel of the trailer) one inlet/outlet 10A is closed, and the other connected by a fluid transfer pipe 11 to an inlet/outlet of the next succeeding fluid displacer, the other inlet/outlet on that displacer being similarly connected to the next succeeding displacer, until the rearmost displacer is reached, and which has one inlet/outlet 10B closed.

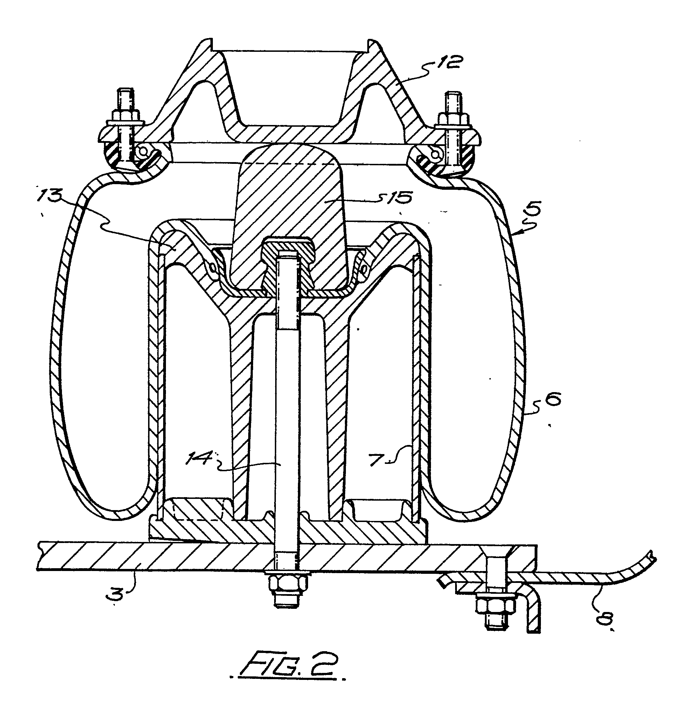

As is shown by Figure 2, each fluid displacer has its body portion 6 formed by a flexible diaphragm secured to a mounting member 12 for attachment to the underside of the trailer. The flexible diaphragm wraps around the piston 13 having a centre stem 14 extending out of the piston at one end to be secured to its respective trailing arm 3 and out of the piston at its other end for securing to a bump stop 15 adapted to engage the mounting member 12 to limit the maximum permitted movement of the axle towards the trailer. By providing the bump stop within the displacer, a greater articulation of the axle is permitted than has hitherto been possible before maximum axle bump over-travel condition is reached, and in the event of sudden failure of the displacer unit or the suspension system, damage to the adjacent, interconnected displacer units is prevented.

The location of the axle 2 and the fluid displacer 5 on each trailing arm 3 is important. Thus, each fluid displacer is located on the trailing arm to the opposite side of the axle from the pivotal connection of the trailing arm to the trailer, and the horizontal distances L1 and L2 between the centre line of the pivotal connection and the centre line of the axle and of the displacer respectively is such that the ratio of those distances remains substantially constant during permitted displacement of the trailing arm. Thus, during any relative movement up or down between the axles 2 of the system, the automatic transfer of fluid between adjacent fluid displacers and the maintenance of the ratio L1 to L2 constant, substantially guarantees that the total load on the vehicle is effectively equalised across the number of axles employed.

The employment of a rolling diaphragm as the fluid displacer not only provides a substantially fricton-free construction, but has the most desirable effect of ensuring that the load applied to the moving component of the displacer remains substantially constant. With such a system variation of the load on the piston 13 can be maintained within ± 0.5% over the full height of the permitted movement of the piston. It is a further advantage of the employment of a rolling diaphragm, that the distance between spring centres transversely of the vehicle are directly comparable with the spring centres of conventional systems thereby affording considerable transverse stability, and at the same time permit greater axle travel. Although not specifically illustrated, transversely opposite fluid displacers can be interconnected, to compensate for any occasion where the road wheel(s) to one side of an axle are lifted or lowered with respect to the road wheel(s) to the opposite side of the same axle.

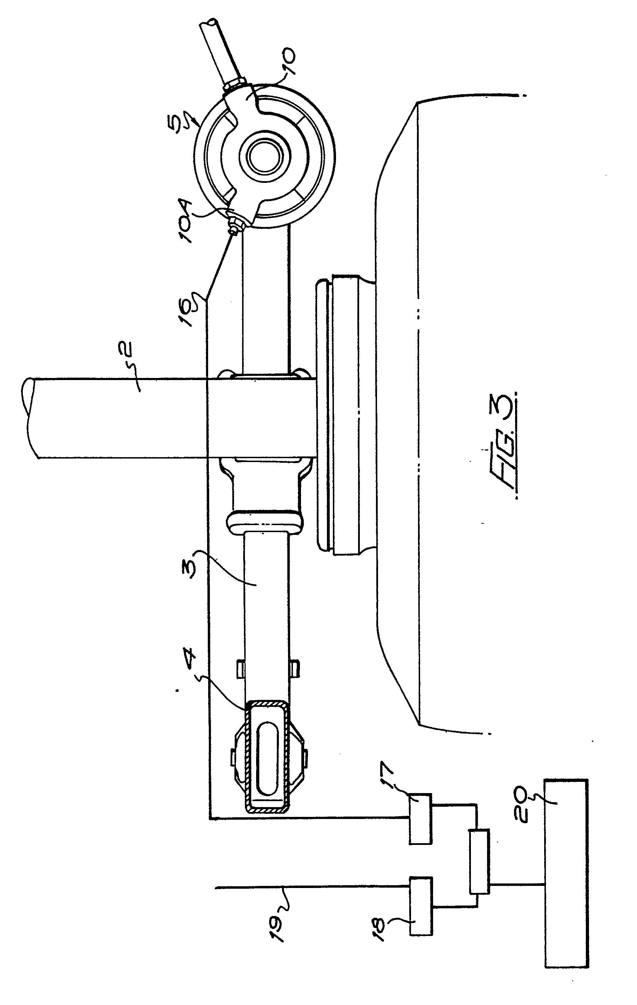

As is shown by Figure 3, the inlet/outlet 10A on the formost displacer can be connected by a small bore pipe 16 to a pressure transducer 17, a second pressure transducer 18 being connected to the laterally opposite displacer by a small bore pipe 19. The pressure dependent signals from the transducers are fed to an indicator of any suitable type such as simply to indicate that the load on the system is within or outside permitted limits, or to a read-out system, digital or otherwise to advise of the total load on the system. It will be understood that the indicator or read-out can be located at any convenient point on the vehicle, such as in the cab to be clearly visible to the driver. As a simple extension to this, pressure transducers can be associated with each displacer, to give individual indications or readings of the load on each axle.

CLAIMS

1.    A suspension system for multiple axle vehicles comprising means associated with the vehicle for locating and supporting each of the multiple axles in resilient manner, said location and support means for each axle being characterised by two trailing arms (3) one to each side of the vehicle and pivotally mounted below the vehicle, the respective axle (2) being mounted across the two trailing arms (3), and a fluid displacer (5) mounted between each trailing arm (3) and the vehicle body, the fluid displacers (5) to each side of the vehicle being connected to each other in the longitudinal direction.

2.    A suspension system as in Claim 1 characterised in that the fluid displacers (5) are located on the trailing arm (3) to the opposite side of the axle (2) to the pivotal connection (4) of the trailing arm (3) to the vehicle, the horizontal distance L1 between the vertical centre line of the pivotal connection (4) and the vertical centre line of the axle (2) and the horizontal distance L2 between the vertical centre line of the pivotal connection (4) and the vertical centre line of the fluid displacer (5) being such that the raio of the said horizontal distances remains substantially constant during permitted deflection of the trailing arm (3).

3. A vehicle suspension as in Claim 2, characterised in that the said horizontal distances L1 and L2 are such that during permitted deflection of the trailing arm (3) said ratio does not vary by more than 10%.

4. A vehicle suspension as in any of Claims 1 to 3, characterised in that each fluid displacer (5) is of a character such that the load applied to its moving component remains substantially constant over its full range of movement.

5. A vehicle suspension as in Claim 4, characterised in that the fluid dispenser (5) is a rolling diaphragm (6).

6. A vehicle suspension as in Claim 5, characterised in that the fluid dispenser (5) has a generally cylindrical body formed by a flexible diaphragm (6) the closed outer end of which is engaged by a smooth-sided piston (13) secured to the trailing arm (3).

7. A vehicle suspension as in Claim 5 or Claim 6, characterised in that a bump-stop (15) is provided to limit the maximum permitted movement of the axle (2) towards the vehicle, the bump-stop (15) being provided within the fluid displacer (5) to be engaged by a piston (13).

8. A vehicle suspension as in Claim 7, characterised in that the contact face of the bump-stop (15) and the abutting face of the piston (13) or such that in the maximum axle bump over-travel condition the two faces are substantially parallel and substantially horizontal.

9. A vehicle suspension as in any of Claims 1 to 8, characterised in that the end of a trailing arm (3) adjacent to the pivot (4) of the next trailing arm (3) is provided with a check strap (8) secured between the end of the trailing arm (3) and the vehicle to limit the maximum permitted movement of a respective axle away from the vehicle.

10. A vehicle suspension as in any of Claims 1 to 9, characterised in that the trailing arms (3) take the form of leaf springs.

11. A vehicle suspension as in any of Claims 1 to 9, characterised in that the trailing arms (3) are relatively rigid and axles (2) are mounted thereon with an interposed resilient suspension means such as the rubber-block type.

12. A vehicle suspension as in any of Claims 1 to 11, characterised in that laterally opposite fluid displacers (5) are interconected to provide transverse stability.

13. A vehicle suspension as in any of Claims 1 to 12, characterised in that a or each fluid displacer is provided with load indicator means (17, 18) to signal the total load on the system or the load on each axle.

FIG.1.

FIG.2

FIG.3

0160371

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| X | US-A-3 140 880 (L.D. MASSER) <br><br> * Whole document * | 1,2,4, 6-8,11 | B 60 G 5/04 <br> B 60 P 5/00 <br> B 60 G 21/06 |
| Y | | 12 | |
| A | | 2,3 | |
| | --- | | |
| Y | FR-A-1 590 817 (G. NAVARRO) <br> * Figures; claims 1,2 * | 12 | |
| | --- | | |
| X | FR-A-2 156 572 (KARL KÄSS BOHRER FAHRZEUGWERKE GmbH) <br> * Figure; claim 1 * | 1,10 | |
| A | | 2-4 | TECHNICAL FIELDS SEARCHED (Int. Cl.4) |
| | --- | | |
| X | GB-A-1 253 694 (PAINTIN & NOTTINGHAM LTD.) <br> * Whole document * | 1,10 | B 60 G <br> B 60 P |
| Y | | 12 | |
| A | | 2,3 | |
| | --- | | |
| Y | GB-A-2 056 383 (A. FRUYTHOF) <br> * Figures 1,2; claims 1,10 * | 12 | |
| | ---      -/- | | |

The present search report has been drawn up for all claims

| Place of search | Date of completion of the search | Examiner |
|---|---|---|
| THE HAGUE | 01-07-1985 | FRANKS B.G. |

01.60371

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | --- | 1-4 | |
| A | US-A-3 117 801 (M.A. DIONNE) <br> * Whole document * <br> --- | 9 | |
| A | DE-C- 811 434 (J. BECKER) <br> * Figures; claims * <br> --- <br><br> ----- | 13 | |

TECHNICAL FIELDS SEARCHED (Int. Cl.4)

The present search report has been drawn up for all claims

| Place of search <br> THE HAGUE | Date of completion of the search <br> 01-07-1985 | Examiner <br> FRANKS B.G. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82